# FASCICULE DE BREVET EUROPEEN

(11) **EP 2 960 038 B1**
(45) Date de publication et mention de la délivrance du brevet: **01.03.2017**
(21) Numéro de dépôt: 15172804.5
(22) Date de dépôt: 18.06.2015
(51) Int. Cl.: B29C 45/14, D06F 75/12, B29L 31/00, B29L 31/26

(54) **PROCÉDÉ DE FABRICATION D'UN APPAREIL DE REPASSAGE COMPORTANT UNE CANALISATION POUR L'ÉCOULEMENT D'UN FLUIDE ET APPAREIL RÉALISÉ PAR UN TEL PROCÉDÉ**
HERSTELLUNGSVERFAHREN EINES BÜGELEISENS, DAS EINE KANALISATION ZUM ABLAUFEN EINER FLÜSSIGKEIT UMFASST, UND MIT DIESEM VERFAHREN HERGESTELLTES GERÄT
METHOD OF PRODUCING AN IRON COMPRISING A PIPE FOR FLUID FLOW AND DEVICE MADE USING SUCH A METHOD

(30) Priorité: 27.06.2014 FR 1456087
(43) Date de publication de la demande: 30.12.2015
(73) Titulaire: SEB S.A., 69130 Ecully (FR)
(72) Inventeur: LOPRETE, Stéphane, 38460 VERNA (FR); BERTHIER, Cécile, 38150 ST ROMAIN DE SURIEU (FR); METAY, Cédric, 38270 PRIMARETTE (FR)
(74) Mandataire: Bourrières, Patrice

(56) Documents cités:
- WO-A1-2009/027364
- DE-A1-102010 006 186
- FR-A1- 2 663 052

## Description

La présente invention se rapporte à un procédé de fabrication d'un appareil électroménager, en particulier un appareil de repassage, comportant une canalisation pour l'écoulement d'un fluide, dans lequel la canalisation est formée par l'assemblage d'au moins deux parties constitutives réunies par un joint. La présente invention se rapporte également à un appareil électroménager obtenu par un tel procédé.

Il est connu, de la demande de brevet FR2663052, un appareil de repassage comportant une canalisation pour l'écoulement d'un fluide formée par deux parties constitutives réunies par un joint. Toutefois, ce document ne divulgue pas la méthode utilisée pour assembler les deux parties l'une à l'autre.

Or, l'assemblage des deux parties constitutives présente l'inconvénient de générer un coût qui peut être plus ou moins important en fonction de la méthode utilisée. De plus, le matériau habituellement utilisé pour réaliser le joint est distinct des autres matériaux utilisés pour la fabrication de l'appareil, ce qui présente l'inconvénient de compliquer le recyclage des matériaux constituant l'appareil.

Aussi, un but de la présente invention est de proposer un procédé de fabrication visant à réduire le cout d'assemblage de l'appareil. Un autre but de la présente invention est de proposer un procédé de fabrication favorisant le taux de recyclabilité de l'appareil.

A cet effet, l'invention a pour objet un procédé de fabrication d'un appareil électroménager de repassage comportant une canalisation pour l'écoulement d'un fluide, la canalisation étant formée par l'assemblage d'au moins deux parties constitutives, caractérisé en ce que les parties constitutives sont assemblées l'une à l'autre par injection d'un joint en matériau plastique lors d'une opération de surmoulage, les deux parties constitutives et le joint
étant réalisés dans une même famille de matériau plastique
pour simplifier la recyclabilité de l'appareil de repassage, et en ce que, sur au moins une des parties constitutives, il est prévu des cavités s'étendant tout le long de la canalisation, les cavités étant remplies par le joint lors de l'opération de surmoulage.

Une telle caractéristique permet d'assurer l'étanchéité de la canalisation à l'aide du joint utilisé pour l'assemblage lors de l'opération de surmoulage, ce qui permet de réduire le nombre d'étapes à la fabrication de l'appareil. De plus, un tel procédé favorise la recyclabilité de l'appareil en utilisant un même composant pour réaliser l'assemblage des deux parties constitutives et l'étanchéité de la canalisation.

Selon une autre caractéristique de l'invention, les deux parties constitutives sont moulées dans un même moule d'injection, l'opération de surmoulage du joint étant également effectuée dans le moule.

Une telle caractéristique permet d'optimiser la qualité de fabrication et le temps de cycle de fabrication en limitant le nombre de manipulations pour l'assemblage des deux parties constitutives.

Les deux parties constitutives et le joint réalisés dans une même famille de matériau plastique, permet de simplifier la recyclabilité de l'appareil en ne faisant appel qu'à un seul type de matière pour le moulage des pièces constitutives et pour la réalisation de l'étanchéité de la canalisation.

Selon une autre caractéristique de l'invention, le matériau plastique est du polypropylène.

Selon une autre caractéristique de l'invention, chacune des parties constitutives comporte une cavité destinée à être remplie par le joint lors de l'opération de surmoulage.

Selon une autre caractéristique de l'invention, les deux parties constitutives forment au moins pour partie un réservoir lorsqu'elles sont assemblées l'une à l'autre.

Une telle caractéristique permet d'intégrer directement la canalisation dans la peau d'un réservoir.

L'invention concerne également un appareil électroménager de repassage susceptible d'être obtenu par le procédé tel que précédemment décrit, comprenant une canalisation pour l'écoulement d'un fluide formée par l'assemblage d'au moins deux parties constitutives réunies par surmoulage d'un joint, caractérisé en ce

qu'au moins une des parties constitutives comporte des cavités s'étendant tout le long de la canalisation, les cavités recevant le joint lors de l'opération de surmoulage, le joint assurant l'étanchéité de la canalisation et contribuant à l'assemblage des deux parties constitutives et en ce que le joint est réalisé dans une même famille de matériau plastique que celui utilisé pour réaliser les deux parties constitutives.

Selon une autre caractéristique de l'invention, les deux parties constitutives définissent au moins une partie d'un réservoir lorsqu'elles sont assemblées l'une à l'autre, la canalisation reliant le réservoir à un organe de l'appareil.

Selon une autre caractéristique de l'invention, l'appareil électroménager de repassage est un appareil de repassage du linge.

Selon une autre caractéristique de l'invention, le réservoir est intégré dans un boitier générateur de vapeur relié par un cordon à un fer à repasser, la canalisation reliant le réservoir à une pompe.

L'invention concerne également un appareil électroménager de repassage comprenant un réservoir formé par l'assemblage d'au moins deux parties constitutives obtenues par moulage dans un moule, caractérisé en ce que les parties constitutives sont assemblées l'une à l'autre par injection d'un joint en matériau plastique lors d'une opération de surmoulage effectuée dans le moule, les deux parties constitutives étant préférentiellement réalisés dans une même famille de matériau plastique, avantageusement du polypropylène.

On comprendra mieux les buts, aspects et avantages de la présente invention, d'après la description donnée ci-après d'un mode particulier de réalisation de l'invention, présenté à titre d'exemple non limitatif, en se référant aux dessins annexés dans lesquels :
- la figure 1 est une vue en perspective d'un appareil de repassage selon un mode particulier de réalisation de l'invention ;
- la figure 2 est une vue de dessus du boîtier de l'appareil de repassage de la figure 1 démuni de sa plateforme repose fer pour avoir un accès visuel sur l'intérieur du boitier ;
- la figure 3 est une vue en perspective du boitier de l'appareil illustré sur la figure 2 ;
- la figure 4A est une vue en perspective éclatée du boitier de l'appareil illustré sur la figure 3 ;
- la figure 4B est une autre vue en perspective éclatée du sous ensemble réservoir, pompe et cuve pour la génération de vapeur équipant l'appareil de repassage de la figure 1.
- la figure 5 est une vue en coupe selon la ligne V-V de la figure 2 ;
- la figure 6 est une vue en coupe selon la ligne VI-VI de la figure 2 ;
- la figure 7 est une vue en coupe selon la ligne VII-VII de la figure 2 ;
- la figure 8 est une vue en coupe selon la ligne VIII-VIII de la figure 2.

Seuls les éléments nécessaires à la compréhension de l'invention ont été représentés. Pour faciliter la lecture des dessins, les mêmes éléments portent les mêmes références d'une figure à l'autre.

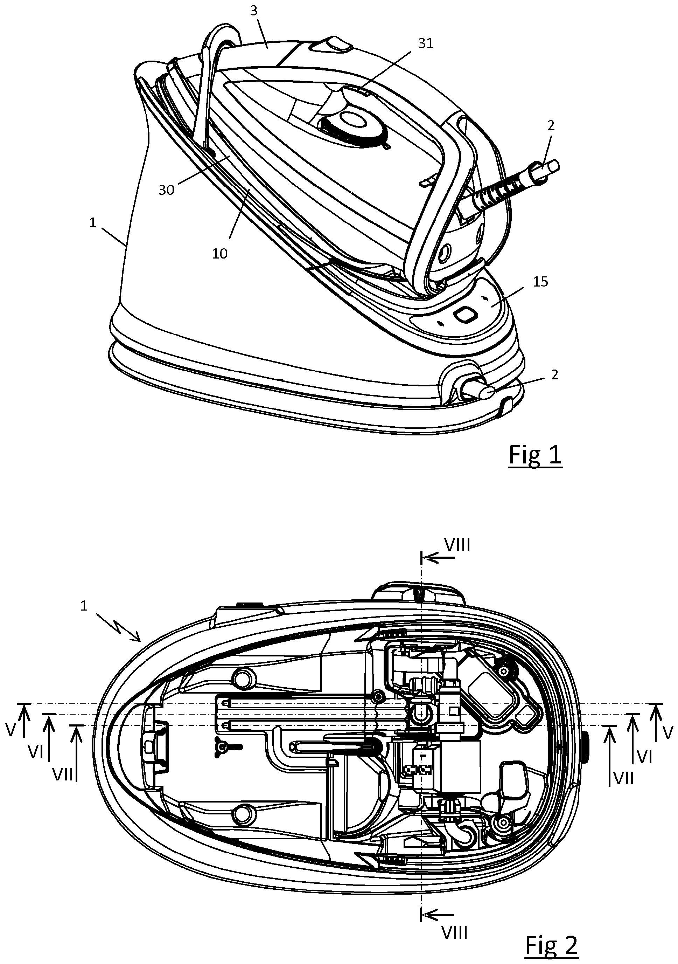

La figure 1 représente un appareil de repassage comportant un boîtier 1 générateur de vapeur relié par un cordon 2 à un fer à repasser 3 comprenant une semelle chauffante 30, le boîtier 1 comprenant un surface supérieure formant un repose fer 10 incliné sur lequel le fer à repasser 3 peut être posé pour son rangement.

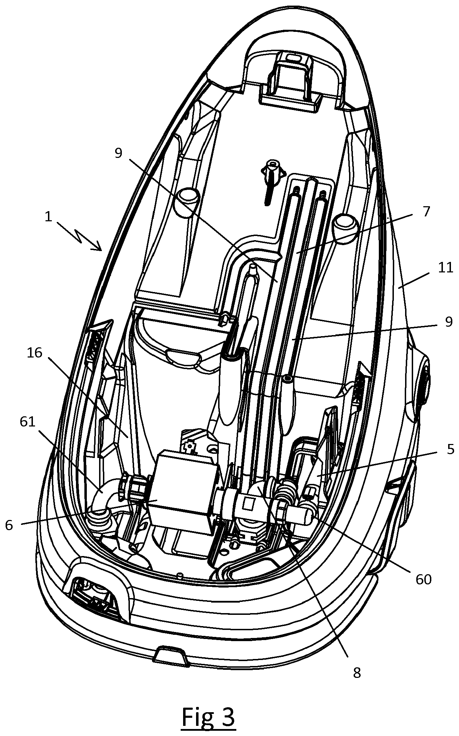

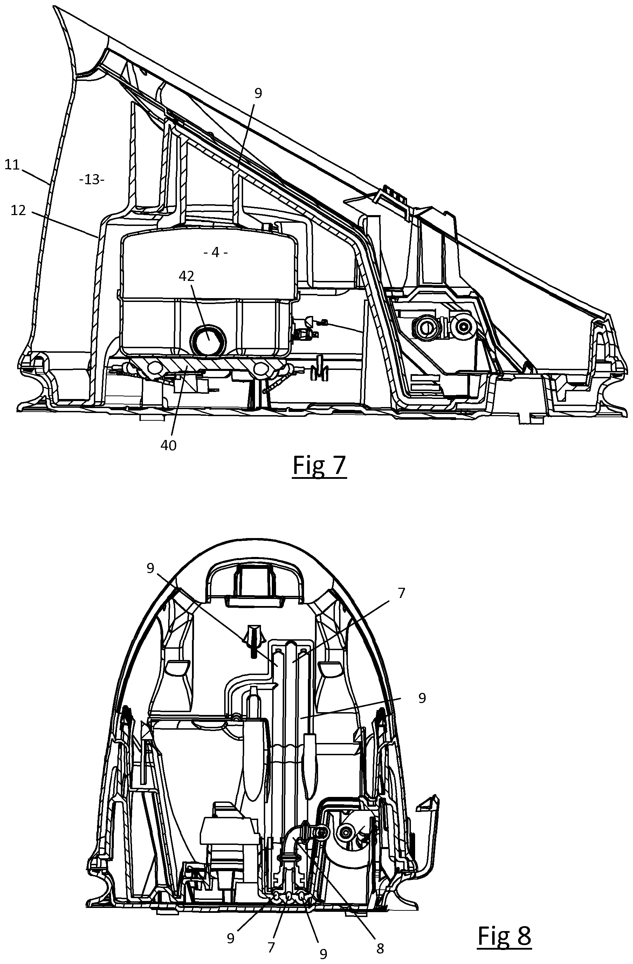

Conformément aux figures 3 à 8, le boitier 1 est réalisé par l'assemblage de pièces en matière plastique, et comporte notamment une pièce externe 11 en polypropylène, avantageusement translucide ou transparente, définissant l'aspect extérieur du boîtier 1 et une pièce interne 12 en polypropylène, avantageusement opaque, venant s'emboîter dans le volume de la pièce externe 11.

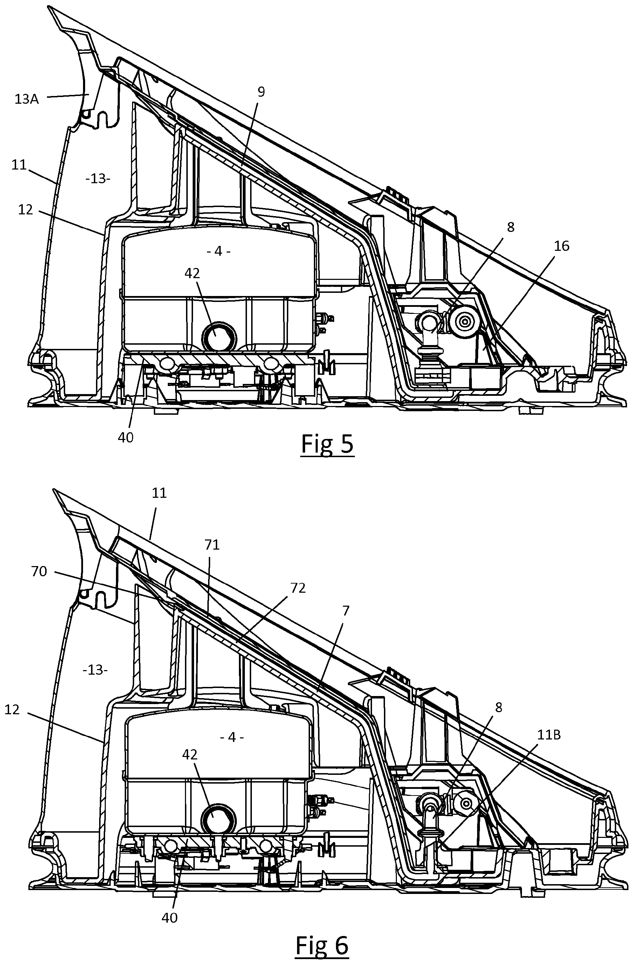

Les pièces interne 12 et externe 11 comportent des formes complémentaires ménageant entre elles un espace définissant un réservoir 13 étanche, visible sur les figure 5 à 7, s'étendant le long de la périphérie du boîtier 1, ce réservoir 13 comprenant un orifice de remplissage 13A masqué par une trappe pivotante, non représentée sur le figures.

Ces pièces interne 12 et externe 11 sont réalisées lors d'une opération de moulage effectuée avantageusement dans un même moule, les pièces interne 12 et externe 11 étant assemblées l'une à l'autre par surmoulage d'un joint réalisé en polypropylène, cette opération de surmoulage du joint étant avantageusement réalisée dans une zone dédiée du moule utilisé pour le moulage des pièces interne 12 et externe 11.

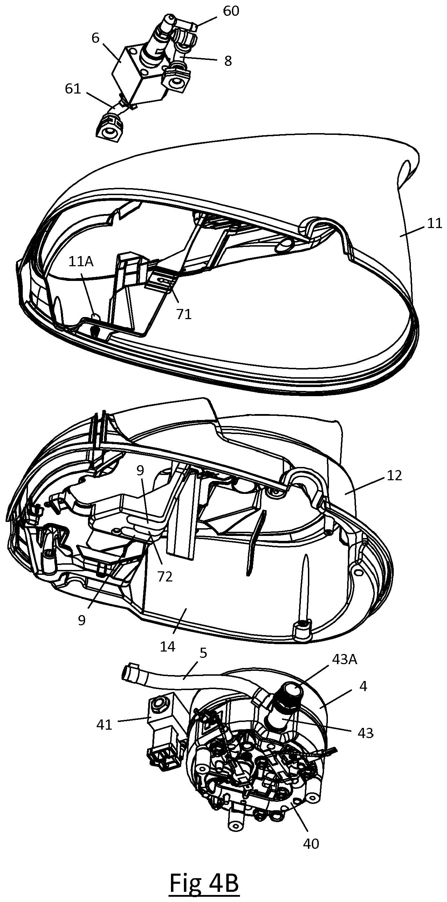

Comme on peut le voir sur les figures 4B et 5, le boîtier 1 renferme une cuve 4 pour la génération de vapeur disposée sous le repose fer 10, la cuve 4 étant disposée dans une enceinte 14 ménagée sur la face inférieure de la pièce interne 12 et comportant des moyens de chauffages 40 régulés pour produire de la vapeur sous une pression supérieure à 4 bars, et préférentiellement de l'ordre de 5 à 6 bars.

La cuve 4 comprend, de manière connue en soi, un orifice de sortie de vapeur équipé d'une électrovanne 41 reliée au fer à repasser par un conduit de vapeur intégré dans le cordon 2, l'électrovanne 41 étant commandée à l'ouverture par un bouton 31 disposé sous la poignée du fer à repasser 3.

La cuve 4 comprend également une ouverture 42 latérale disposée à proximité du fond de la cuve 4, cette ouverture 42 communiquant avec un raccod rigide 43 comportant une extrémité axiale munie d'un orifice de vidange 43A fermé par un bouchon, non représenté sur les figures. Le raccord rigide 43 comprend une entrée latérale reliée à un tuyau d'alimentation 5 de la cuve 4 connecté à un orifice de sortie 60 d'une pompe 6 haute pression, constituée avantageusement par une pompe électromagnétique, fournissant une pression de l'ordre de 15 bars. La pompe 6 est disposée horizontalement dans un logement 16 ménagé sous un panneau de commande 15 disposé à l'avant du boîtier 1, visible sur la figure 1, la pompe 6 étant avantageusement fixée dans le boîtier 1 au moyen de supports élastiques en silicone, non visibles sur les figures.

Conformément à la figure 2 à 3, la pompe 6 comporte un conduit d'admission 61 qui est relié à un embout d'aspiration 11A, visible sur la figure 4B, ménagé dans une paroi de la pièce externe 11, l'embout d'aspiration 11A débouchant dans le réservoir 13 au niveau d'un point bas de ce dernier de manière à permettre l'aspiration par la pompe 6 de sensiblement l'intégralité de l'eau contenue dans le réservoir 13.

Afin de faciliter l'amorçage au démarrage de la pompe 6, cette dernière est également reliée, en parallèle du tuyau d'alimentation 5 de la cuve 4, à une canalisation 7 de section de passage réduite qui communique avec le réservoir 13 et permet d'abaisser la pression en sortie de la pompe 6 lorsque cette dernière est arrêtée.

La canalisation 7 est ménagée à l'interface entre les pièces interne 12 et externe 11 et comporte une extrémité munie d'un embout de raccordement 11 B, visible sur la figure 6, qui fait saillie sur la face supérieure de la pièce externe 11 au niveau du logement 16 de réception de la pompe 6, l'embout de raccordement 11 B étant connecté à un conduit de refoulement 8 relié à un second orifice de sortie de la pompe 6.

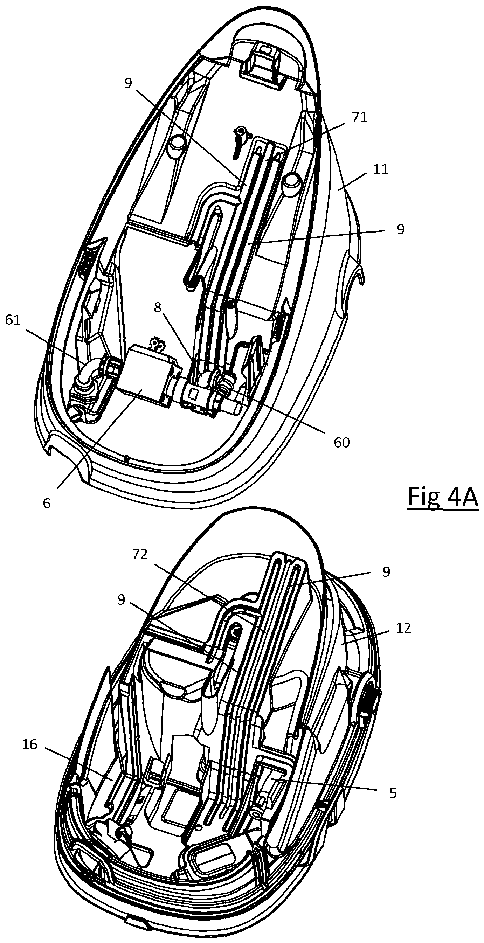

Conformément aux figures 4A et 4B, la canalisation 7 est formée par la mise en correspondance d'une rainure 71 ménagée sur la face inférieure de la pièce externe 11 avec une rainure 72 ménagée sur la face supérieure de la pièce interne 12, la canalisation 7 s'étendant depuis l'embout de raccordement 11 B jusqu'à un orifice de sortie 70 débouchant dans une partie du réservoir 13 s'étendant au dessus de la cuve 4.

Plus particulièrement selon l'invention, les pièces externe 11 et interne 12 comprennent des cavités 9, visibles sur les figures 5, 7 et 8, s'étendant en bordure des rainures 71, 72 sur toute la longueur de ces dernières, les cavités 9 étant remplies par le joint injecté pour l'assemblage des pièces interne 12 et externe 11 lors de l'opération de surmoulage de sorte que le joint assure à la fois le collage des pièces interne 12 et externe 11 et l'étanchéité de la canalisation 7.

L'appareil ainsi réalisé présente l'avantage de posséder une canalisation 7 qui est réalisée par l'assemblage des pièces interne 12 et externe 11 du réservoir 13 dont l'étanchéité est assurée directement par le joint assurant le collage des pièces externe 11 et interne 12, lors de l'opération de surmoulage de ce joint.

Une telle intégration de la canalisation 7 permet d'éviter l'usage d'un tuyau rapporté pour réaliser cette fonction, ce qui permet d'éliminer l'opération nécessaire à la mise en place du tuyau qui est complexe et est habituellement réalisée de façon manuelle par un opérateur.

Une telle construction permet donc de réduire le nombre d'opérations d'assemblages lors de la construction de l'appareil et de simplifier sa construction, procurant ainsi un gain économique. De plus, ce gain économique est renforcé par la suppression du coût du tuyau habituellement utilisé pour réaliser la fonction de la canalisation.

Enfin, la suppression du tuyau dans une telle construction présente également l'avantage de favoriser le taux de recyclabilité de l'appareil, le joint utilisé pour assurer l'étanchéité de la canalisation présentant l'avantage d'être réalisé dans la même famille de matériau plastique que celle utilisée pour la fabrication des pièces interne 12 et externe 11 du réservoir.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi dans une variante de réalisation, l'opération de surmoulage du joint pour l'assemblage des pièces interne et externe du réservoir pourra être réalisée dans un moule distinct de celui utilisé pour le moulage des pièces interne et externe.

## Revendications

1. Procédé de fabrication d'un appareil de repassage comportant une canalisation (7) pour l'écoulement d'un fluide, ladite canalisation (7) étant formée par l'assemblage d'au moins deux parties constitutives (11, 12), **caractérisé en ce que** les parties constitutives (11, 12) sont assemblées l'une à l'autre par injection d'un joint en matériau plastique lors d'une opération de surmoulage, les deux parties constitutives (11, 12) et le joint étant réalisés dans une même famille de matériau plastique pour simplifier la recyclabilité de l'appareil de repassage, et **en ce que**,
sur au moins une des parties constitutives (11, 12), il est prévu des cavités (9) s'étendant tout le long de la canalisation (7), lesdites cavités (9) étant remplies par le joint lors de l'opération de surmoulage.

2. Procédé de fabrication selon la revendication 1, **caractérisé en ce que** les deux parties constitutives (11, 12) sont moulées dans un même moule d'injection et **en ce que** l'opération de surmoulage du joint est également effectuée dans ledit moule.

3. Procédé de fabrication selon l'une quelconque des revendications 1 à 2, **caractérisé en ce que** le matériau plastique est du polypropylène.

4. Procédé de fabrication selon l'une quelconque des revendications 1 à 3, **caractérisé en ce que** chacune des parties constitutives (11, 12) comporte une cavité (9) destinée à être remplie par le joint lors de l'opération de surmoulage.

5. Procédé de fabrication selon l'une quelconque des revendications 1 à 4, **caractérisé en ce que** les deux parties constitutives (11, 12) forment au moins pour partie un réservoir (13) lorsqu'elles sont assemblées l'une à l'autre.

6. Appareil électroménager de repassage susceptible d'être obtenu par le procédé selon l'une quelconque des revendications 1 à 5, comprenant une canalisation (7) pour l'écoulement d'un fluide formée par l'assemblage d'au moins deux parties constitutives (11, 12) réunies par surmoulage d'un joint, **caractérisé en ce qu'**au moins une des parties constitutives (11, 12) comporte des cavités (9) s'étendant tout le long de la canalisation (7), lesdites cavités (9) recevant le joint lors dune opération de surmoulage, ledit joint assurant l'étanchéité de la canalisation (7) et contribuant à l'assemblage des deux parties constitutives (11, 12) et **en ce que** le joint est réalisé dans une même famille de matériau plastique que celui utilisé pour réaliser les deux parties constitutives (11, 12), pour simplifier la recyclabilité de l'appareil de repassage.

7. Appareil électroménager de repassage selon la revendication 6, **caractérisé en ce que** les deux parties constitutives (11, 12) définissent au moins une partie d'un réservoir (13), et préférentiellement définissent un réservoir dans son intégralité, lorsqu'elles sont assemblées l'une à l'autre et **en ce que** ladite canalisation (7) relie le réservoir (13) à un organe de l'appareil.

8. Appareil électroménager de repassage selon la revendication 7, **caractérisé en ce que** le réservoir (13) est intégré dans un boitier (1) générateur de vapeur relié par un cordon (2) à un fer à repasser (3) et **en ce que** la canalisation (7) relie le réservoir (13) à une pompe (6).

9. Appareil électroménager de repassage selon l'une quelconque des revendications 6 à 8, **caractérisé en ce que** le matériau plastique est du polypropylène.

10. Appareil électroménager de repassage selon l'une quelconque des revendications 6 à 9, **caractérisé en ce que** chacune des parties constitutives (11, 12) comporte une cavité (9) destinée à être remplie par le joint lors de l'opération de surmoulage.

## Patentansprüche

1. Verfahren zur Fertigung eines Bügelgerätes mit einem Kanal (7) für den Durchfluss einer Flüssigkeit, wobei der Kanal (7) durch das Zusammenfügen von zumindest zwei Bestandteilen (11, 12) gebildet wird, **dadurch gekennzeichnet, dass** die Bestandteile (11, 12) durch Einspritzen einer Dichtung aus Kunststoff bei einem Arbeitsgang der Aufformung zusammengefügt werden, wobei die beiden Bestandteile (11, 12) und die Dichtung aus einem Kunststoff derselben Familie hergestellt werden, um die Wiederverwertbarkeit des Bügelgerätes zu vereinfachen, und dass an zumindest einem der Bestandteile (11, 12) Vertiefungen (9) vorgesehen sind, die sich über die gesamte Länge des Kanals (7) erstrecken, wobei die Vertiefungen (9) bei dem Arbeitsgang der Aufformung von der Dichtung ausgefüllt werden.

2. Fertigungsverfahren nach Anspruch 1, **dadurch gekennzeichnet, dass** die beiden Bestandteile (11, 12) in derselben Spritzgussform geformt werden und dass der Arbeitsgang der Aufformung der Dichtung ebenfalls in der Form durchgeführt wird.

3. Fertigungsverfahren nach einem der Ansprüche 1 bis 2, **dadurch gekennzeichnet, dass** der Kunststoff Polypropylen ist.

4. Fertigungsverfahren nach einem der Ansprüche 1 bis 3, **dadurch gekennzeichnet, dass** jeder der Bestandteile (11, 12) eine Vertiefung (9) aufweist, die dafür bestimmt ist, bei dem Arbeitsgang der Aufformung von der Dichtung ausgefüllt zu werden.

5. Fertigungsverfahren nach einem der Ansprüche 1 bis 4, **dadurch gekennzeichnet, dass** die beiden Bestandteile (11, 12) nach dem Zusammenfügen zumindest zum Teil einen Tank (13) bilden.

6. Elektrohaushaltsgerät zum Bügeln, das durch das Fertigungsverfahren nach einem der Ansprüche 1 bis 5 hergestellt werden kann, mit einem Kanal (7) für den Durchfluss einer Flüssigkeit, der durch das Zusammenfügen von zumindest zwei Bestandteilen (11, 12) gebildet wird, die durch Aufformung einer Dichtung zusammengefügt werden, **dadurch gekennzeichnet, dass** zumindest einer der Bestandteile (11, 12) Vertiefungen (9) aufweist, die sich über die gesamte Länge des Kanals (7) erstrecken, wobei die Vertiefungen (9) bei dem Arbeitsgang der Aufformung die Dichtung aufnehmen, wobei die Dichtung die Abdichtung des Kanals (7) sicherstellt und zum Zusammenfügen der beiden Bestandteile (11, 12) beiträgt, und dass die Dichtung aus einem Kunststoff der gleichen Familie wie demjenigen hergestellt ist, der für die Herstellung der beiden Bestandteile (11, 12) verwendet wird, um die Wiederverwertbarkeit des Bügelgerätes zu vereinfachen.

7. Elektrohaushaltsgerät zum Bügeln nach Anspruch 6, **dadurch gekennzeichnet, dass** die beiden Bestandteile (11, 12) nach dem Zusammenfügen zumindest einen Teil eines Tanks (13) definieren und vorzugsweise einen kompletten Tank definieren und dass der Kanal (7) den Tank (13) mit einem Element des Gerätes verbindet.

8. Elektrohaushaltsgerät zum Bügeln nach Anspruch 7, **dadurch gekennzeichnet, dass** der Tank (13) in ein Gehäuse (1) zur Dampferzeugung integriert ist, das über eine Leitung (2) mit einem Bügeleisen (3) verbunden ist, und dass der Kanal (7) den Tank (13) mit einer Pumpe (6) verbindet.

9. Elektrohaushaltsgerät zum Bügeln nach einem der Ansprüche 6 bis 8, **dadurch gekennzeichnet, dass** der Kunststoff Polypropylen ist.

10. Elektrohaushaltsgerät zum Bügeln nach einem der Ansprüche 6 bis 9, **dadurch gekennzeichnet, dass** jeder der Bestandteile (11, 12) eine Vertiefung (9) aufweist, die dafür bestimmt ist, bei dem Arbeitsgang der Aufformung von der Dichtung ausgefüllt zu werden.

## Claims

1. Method for manufacturing an ironing appliance comprising a pipe (7) for the flow of a fluid, said pipe (7) being formed by the assembly of at least two component parts (11, 12), **characterised in that** the component parts (11, 12) are joined to each other by injecting a plastic seal during an overmoulding operation, the two component parts (11, 12) and the seal being made of the same family of plastic to make the ironing appliance easier to recycle, and **in that**, on at least one of the component parts (11, 12), cavities (9) are provided extending all along the pipe (7), said cavities (9) being filled by the seal during the overmoulding operation.

2. Manufacturing method according to claim 1, **characterised in that** the two component parts (11, 12) are moulded in the same injection mould and **in that** the seal overmoulding operation is also performed in said mould.

3. Manufacturing method according to claim 1 or 2, **characterised in that** the plastic material is polypropylene.

4. Manufacturing method according to any one of claims 1 to 3, **characterised in that** each of the component parts (11, 12) has a cavity (9) intended to be filled by the seal during the overmoulding operation.

5. Manufacturing method according to any one of claims 1 to 4, **characterised in that** the two component parts (11, 12) form at least part of a tank (13) when assembled together.

6. Ironing appliance obtainable by the method according to any one of claims 1 to 5, comprising a pipe (7) for the flow of a fluid formed by the assembly of at least two component parts (11, 12) joined by overmoulding a seal, **characterised in that** at least one of the component parts (11, 12) comprises cavities (9) extending all along the pipe (7), said cavities (9) receiving the seal during an overmoulding operation, said seal sealing the pipe (7) and contributing to the assembly of the two component parts (11, 12) and **in that** the seal is made of the same family of plastic material as that used to produce the two component parts (11, 12), to make the ironing appliance easier to recycle.

7. Ironing appliance according to claim 6, **characterised in that** the two component parts (11, 12) define at least a part of a tank (13), and preferably define a tank in its entirety, when they are assembled together and **in that** said pipe (7) connects the tank (13) to a member of the appliance.

8. Domestic ironing appliance according to claim 7, **characterised in that** the tank (13) is integrated in a steam generator housing (1) connected by a cord (2) to an iron (3) and **in that** the pipe (7) connects the tank (13) to a pump (6).

9. Domestic ironing appliance according to any one of claims 6 to 8, **characterised in that** the plastic material is polypropylene.

10. Domestic ironing appliance according to any one of claims 6 to 9, **characterised in that** each of the component parts (11, 12) has a cavity (9) intended to be filled by the seal during the overmoulding operation.
